# EUROPEAN PATENT SPECIFICATION

(11) **EP 1 766 810 B1**
(45) Date of publication and mention of the grant of the patent: **31.10.2007**
(21) Application number: 05771252.3
(22) Date of filing: 11.07.2005
(51) Int. Cl.: H04B 7/185

(54) **CO-CHANNEL INTERFERENCE REDUCING ARRANGEMENT IN A SATELLITE COMMUNICATIONS SYSTEMS, AND METHOD**
ANORDNUNG ZUR VERRINGERUNG DER GLEICHKANALSTÖRUNG IN SATELLITENKOMMUNIKATIONSSYSTEMEN, UND VERFAHREN
SCHEMA DE REDUCTION D'INTERFERENCES DE CANAUX CONJOINTS DANS DES SYSTEMES DE COMMUNICATIONS PAR SATELLITE ET PROCEDE CORRESPONDANT

(30) Priority: 14.07.2004 US 890758
(43) Date of publication of application: 28.03.2007
(73) Proprietor: ATC Technologies, LLC, Reston, VA 20191- 5416 (US)
(72) Inventor: KARABINIS, Peter, D., Cary, NC 27511 (US); DUTTA, Santanu, Cary, NC 27513 (US); CHURAN, Gary, G., Annandale, VA 22003 (US); ZHENG, Dunmin, Vienna, VA 22180 (US)
(74) Representative: Vigars, Christopher Ian
(86) International application number: PCT/US2005/024458
(87) International publication number: WO 2006/019667

(56) References cited:
- US-A1- 2004 042 569
- TAKESHI MIZUIKE ET AL: "OPTIMIZATION OF FREQUENCY ASSIGNMENT" IEEE TRANSACTIONS ON COMMUNICATIONS, IEEE SERVICE CENTER, PISCATAWAY, NJ, US, vol. 37, no. 10, 1 October 1989 (1989-10-01), pages 1031-1041, XP000070202 ISSN: 0090-6778

## Description

### Related Application

The present application is a continuation-in part of United States Application Serial Number 10/890,758 entitled *Intra- And*/*Or Inter-System Interference Reducing Systems and Methods for Satellite Communications Systems,* filed July 14, 2004, which claims priority to United States Provisional Application Serial Number 60/490,993, also entitled *Intra- And*/*Or Inter-System Interference Reducing Systems and Methods for Satellite Communications Systems,* filed July 30, 2003, these documents having been published as US 2005 136 836 and US 2005 037 749.

### Field of the Invention

This invention relates to radiotelephone communications systems and methods, and more particularly to terrestrial cellular and satellite cellular radiotelephone communications systems and methods.

### Background of the Invention

Satellite radiotelephone communications systems and methods are widely used for radiotelephone communications. Satellite radiotelephone communications systems and methods generally employ at least one space-based component, such as one or more satellites that are configured to wirelessly communicate with a plurality of satellite radiotelephones.

A satellite radiotelephone communications system or method may utilize a single beam (cell) covering an entire area served by the system. Alternatively, in cellular satellite radiotelephone communications systems and methods, multiple beams are provided, each of which can serve distinct geographical areas in the overall service region, to collectively serve an overall satellite footprint. Thus, a cellular architecture similar to that used in conventional terrestrial cellular/PCS radiotelephone systems and methods can be implemented in cellular satellite-based systems and methods. The satellite typically communicates with radiotelephones over a bidirectional communications pathway, with radiotelephone communication signals being communicated from the satellite to the radiotelephone over a downlink or forward link, and from the radiotelephone to the satellite over an uplink or return link.

The overall design and operation of cellular satellite radiotelephone systems and methods are well known to those having skill in the art, and need not be described further herein. Moreover, as used herein, the term "radiotelephone" includes cellular and/or satellite radiotelephones with or without a multi-line display; Personal Communications System (PCS) terminals that may combine a radiotelephone with data processing, facsimile and/or data communications capabilities; Personal Digital Assistants (PDA) that can include a radio frequency transceiver and a pager, Intemet/intranet access, Web browser, organizer, calendar and/or a global positioning system (GPS) receiver; and/or conventional laptop and/or palmtop computers or other appliances, which include a radio frequency transceiver. Radiotelephones may also -be referred to herein as "radioterminals" or simply "terminals".

As is well known to those having skill in the art, terrestrial networks can enhance cellular satellite radiotelephone system availability, efficiency and/or economic viability by terrestrially reusing at least some of the frequency bands that are allocated to cellular satellite radiotelephone systems. In particular, it is known that it may be difficult for cellular satellite radiotelephone systems to reliably serve densely populated areas, because the satellite signal may be blocked by high-rise structures and/or may not penetrate into buildings. As a result, the satellite spectrum may be underutilized or unutilized in such areas. The use of terrestrial retransmission can reduce or eliminate this problem.

Moreover, the capacity of the overall system can be increased significantly by the introduction of terrestrial retransmission, since terrestrial frequency reuse can be much denser than that of a satellite-only system. In fact, capacity can be enhanced where it may be mostly needed, i.e., in densely populated urban/industrial/commercial areas. As a result, the overall system can become much more economically viable, as it may be able to serve a much larger subscriber base. Finally, satellite radiotelephones for a satellite radiotelephone system having a terrestrial component within the same satellite frequency band and using substantially the same air interface for both terrestrial and satellite communications can be more cost effective and/or aesthetically appealing. Conventional dual band/dual mode alternatives, such as the well known Thuraya, Iridium and/or Globalstar dual mode satellite/terrestrial radiotelephone systems, may duplicate some components, which may lead to increased cost, size and/or weight of the radiotelephone.

United States Patent No. 6,684,057, to coinventor Karabinis, and entitled *Systems and Methods for Terrestrial Reuse of Cellular Satellite Frequency Spectrum,* describes that a satellite radiotelephone frequency can be reused terrestrially by an ancillary terrestrial network even within the same satellite cell, using interference cancellation techniques. In particular, the satellite radiotelephone system according to some embodiments of published Patent Application 2003/0054760 includes a space-based component that is configured to receive wireless communications from a first radiotelephone in a satellite footprint over a satellite radiotelephone frequency band, and an ancillary terrestrial network that is configured to receive wireless communications from a second radiotelephone in the satellite footprint over the satellite radiotelephone frequency band. The space-based component also receives the wireless communications from the second radiotelephone in the satellite footprint over the satellite radiotelephone frequency band as interference, along with the wireless communications that are received from the first radiotelephone in the satellite footprint over the satellite radiotelephone frequency band. An interference reducer is responsive to the space-based component and to the ancillary terrestrial network that is configured to reduce the interference from the wireless communications that are received by the space-based component from the first radiotelephone in the satellite footprint over the satellite radiotelephone frequency band, using the wireless communications that are received by the ancillary terrestrial network from the second radiotelephone in the satellite footprint over the satellite radiotelephone frequency band.

United States Patent Application Publication No. 2003/0054761 A1, published March 20, 2003 to coinventor Karabinis and entitled *Spatial Guardbands for Terrestrial Reuse of Satellite Frequencies,* describes satellite radiotelephone systems that include a space-based component that is configured to provide wireless radiotelephone communications in a satellite footprint over a satellite radiotelephone frequency band. The satellite footprint is divided into a plurality of satellite cells, in which satellite radiotelephone frequencies of the satellite radiotelephone frequency band are spatially reused. An ancillary terrestrial network is configured to terrestrially reuse at least one of the satellite radiotelephone frequencies that is used in a satellite cell in the satellite footprint, outside the cell and in some embodiments separated therefrom by a spatial guardband. The spatial guardband may be sufficiently large to reduce or prevent interference between the at least one of the satellite radiotelephone frequencies that is used in the satellite cell in the satellite footprint, and the at least one of the satellite radiotelephone frequencies that is terrestrially reused outside the satellite cell and separated therefrom by the spatial guardband. The spatial guardband may be about half a radius of a satellite cell in width.

An interference canceling system for satellite downlink communications received by a an earth station is described in United States Patent Application Publication No. 2004/0042569 to Casabona et al. The system addresses terrestrial, co-channel and adjacent satellite interference. Main and auxiliary signals are derived directly or by coherent conversion to intermediate frequency using an auxiliary antenna, cross-polarized feed, or auxiliary squinted feed.

### Summary of the Invention

In some embodiments of the present invention, first radio signals are received at a first satellite, the received first radio signals including a desired satellite uplink signal transmitted from a first source using a frequency assigned to the first source and an interfering signal transmitted from a second source using the frequency assigned to the first source. The first radio signals are combined based on a first performance criterion to generate a first output signal. Second radio signals are received at a second satellite, the received second radio signals including the desired signal. The second radio signals are combined based on a second performance criterion to produce a second output signal. The first and second output signals are combined based on a third performance criterion to generate an estimate of the desired satellite uplink signal.

According to some embodiments, a first timing for the desired signal as received at the first satellite is determined by, for example, synchronizing to a timing reference, such as a pilot signal or synchronization sequence. An error of the first output signal is determined responsive to the determined first timing. The first radio signals are combined responsive to the determined error of the first output signal. Similarly, a second timing for the desired signal as received at the second satellite is determined, and an error of the second output signal is determined responsive to the determined second timing. The second radio signals are combined responsive to the determined second error of the second output signal.

In further embodiments, combining the first radio signals based on a first performance criterion to generate a first output signal includes applying the first radio signals to a plurality of filters, combining outputs of the plurality of filters to produce the first output signal and modifying the plurality of filters responsive to the first output signal. Combining the first and second output signals to generate an estimate of the desired satellite uplink signal may include maximal ratio combining the first and second output signals.

According to additional embodiments of the present invention, a satellite radiotelephone communications system includes a first satellite that receives first radio signals including a desired satellite uplink signal transmitted from a first source using a frequency assigned to the first source and an interfering signal transmitted from a second source using the frequency assigned to the first source. The system also includes a second satellite that receives second radio signals including the desired signal. The system further includes an interference-suppressing signal processor configured to combine the first radio signals based on a first performance criterion to generate a first output signal, to combine the second radio signals based on a second performance criterion to produce a second output signal, and to combine the first and second output signals to generate an estimate of the desired satellite uplink signal.

In yet further embodiments, a receiver apparatus includes an interference-suppressing signal processor configured to combine first radio signals from a first satellite based on a first performance criterion to generate a first output signal, to combine second radio signals from a second satellite based on a second performance criterion to produce a second output signal, and to combine the first and second output signals to generate an estimate of the desired satellite uplink signal.

### Brief Description of the Drawings

Figure 1 is a schematic diagram illustrating a satellite communications system and operations thereof according to some embodiments of the present invention.
Figure 2 is a cell layout diagram illustrating exemplary operations of a satellite communications system according to further embodiments of the present invention.
Figure 3 is a schematic diagram of an interference-suppressing signal processor according to some embodiments of the present invention.
Figures 4-6 are schematic diagrams illustrating satellite communications systems and operations thereof according to additional embodiments of the present invention.
Figure 7 is a schematic diagram of an interference-suppressing signal processor according to further embodiments of the present invention.

### Detailed Description

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Some embodiments of the present invention described herein involve the use of diverse satellite reception paths to receive desired satellite uplink signals and one or more interfering signals. As used herein, a "satellite reception path" generally refers to one or more elements that are configured to receive and convey satellite-received signals, i.e., signals that impinge upon a satellite from, for example, terrestrially positioned sources, such as radiotelephones. Accordingly, a satellite reception path may include, but is not limited to, a satellite antenna, a spot beam supported by a satellite antenna, electronic circuitry that receives and transports signals received by a satellite antenna, and terrestrially-based antennas and hardware that receive a satellite-received signal via, for example, a "bent pipe," "regenerative," "non-regenerative" and/or other satellite relay mechanism. As used herein, a "radio signal" received by such a satellite reception path may include a radio-frequency carrier modulated signal transmitted by a source and/or data, voice or other signals combined with or embedded in such a radio-frequency signal.

Some embodiments of the present invention will be described herein relative to first and second satellite radiotelephone communications systems. For convenience, the first satellite radiotelephone communications system, and components thereof, may be referred to as "MSV" and may, in some embodiments, correspond to a satellite radiotelephone system provided by Mobile Satellite Ventures, LP, the assignee of the present invention. The second satellite radiotelephone system and/or components thereof may be referred to as "non-MSV". However, it will be understood that the invention is not limited to applications involving combinations of MSV and non-MSV systems, and that any first and second satellite radiotelephone communications systems may be encompassed by the designations MSV and non-MSV.

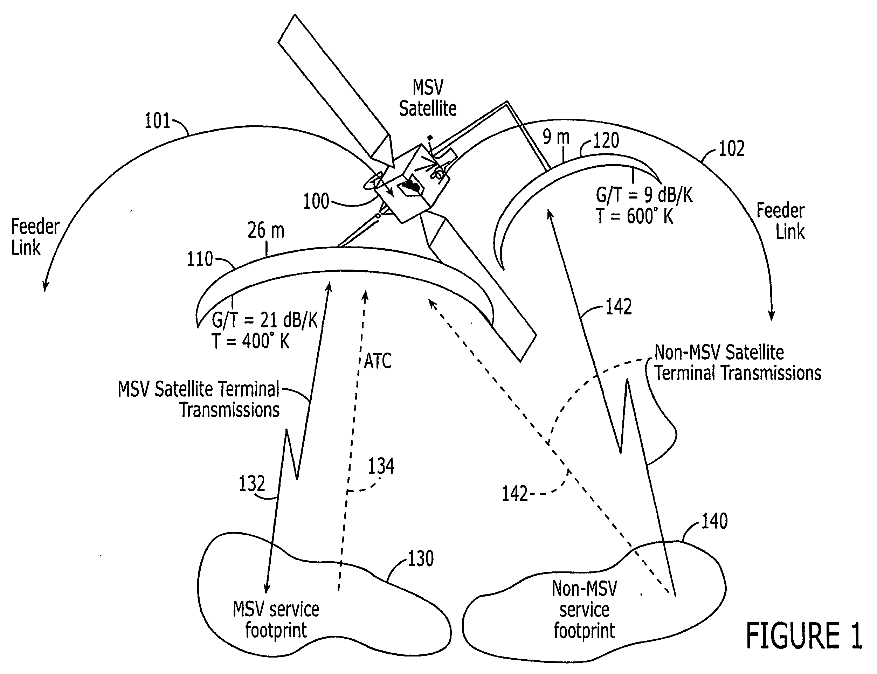

Figure 1 illustrates a satellite 100 that is configured with two antennas 110, 120 according to some embodiments of the present invention. The antennas 110, 120 of the satellite 100 may be of different sizes (in the illustrated embodiments, 26 meters and 9 meters, respectively) and may be directed toward different service footprints 130, 140. The service footprints may be disjoint (as is illustrated in Figure 1), may have some overlap, or be fully overlapping. Specifically, Figure 1 shows the larger one 110 of the two satellite antennas 110, 120 directed toward an area 130 labeled "MSV service footprint", while the smaller antenna 120, also referred to herein as an ancillary antenna, is directed toward an area 140 labeled "non-MSV service footprint." The smaller antenna 120 may be configured to receive only. The larger antenna 110 may be configured to receive and transmit. Each antenna 110, 120 may be configured to form a plurality of spot beams (cells) over its respective footprint or area.

Satellite terminal transmissions 142 that may be intended for a non-MSV satellite (such as an Inmarsat satellite) may also be intercepted (intentionally or unintentionally) by at least one MSV satellite. At least some satellite terminal transmissions by non-MSV satellite terminals may be co-channel with at least some of MSV's satellite terminal transmissions. Thus, at least some satellite terminal transmissions by non-MSV satellite terminals that are intended for a non-MSV satellite and are co-channel with at least some satellite terminal transmissions 132 of MSV's satellite terminals (intended for MSV's satellite(s)) may cause co-channel interference to at least some of MSV's satellite receivers. According to some embodiments of the present invention, systems and methods are provided that are capable of adaptively mitigating the effects of inter-system co-channel interference in order to allow improved communications performance and also to potentially facilitate more efficient reuse of radio frequency resources between systems.

At least one ancillary antenna on an MSV satellite (the smaller antenna 120 on the MSV satellite of Figure 1) may be configured and/or positioned to maximize its reception of emissions by non-MSV satellite terminals that are intended for a non-MSV satellite. This antenna, thus configured and/or positioned, may receive substantially strong interference signals that may be used at an MSV infrastructure element (such as a satellite gateway) to mitigate (reduce, suppress or substantially eliminate) interference signals that may be received by the MSV satellite antenna whose mission is to provide communications service to MSV's user terminals over MSV's service area.

Still referring to Figure 1, an Ancillary Terrestrial Network (ATN) comprising a plurality of Ancillary Terrestrial Components (ATCs) may be deployed over certain areas of MSV's service footprint 130. An ATC comprises one or more radiating infrastructure elements, such as a base station with associated back-end infrastructure. At least one radioterminal may communicate with the at least one radiating infrastructure element. Signals 134 that are radiated by an ATC and/or by a radioterminal that may be communicating with an ATC and/or a satellite may inadvertently be intercepted by MSV's satellite(s) 100, causing additional interference.

According to some embodiments of the present invention, the Space Based Network (SBN), including a Space Based Component (SBC) (e.g., at least one satellite) and ground infrastructure (e.g., at least one gateway), includes systems and/or methods for adaptively mitigating interference received from at least certain elements of the ATN and/or radioterminals. According to some embodiments of the present invention, the SBN also includes systems and/or methods that are capable of adaptively mitigating interference caused by intra-system and/or inter-system frequency reuse.

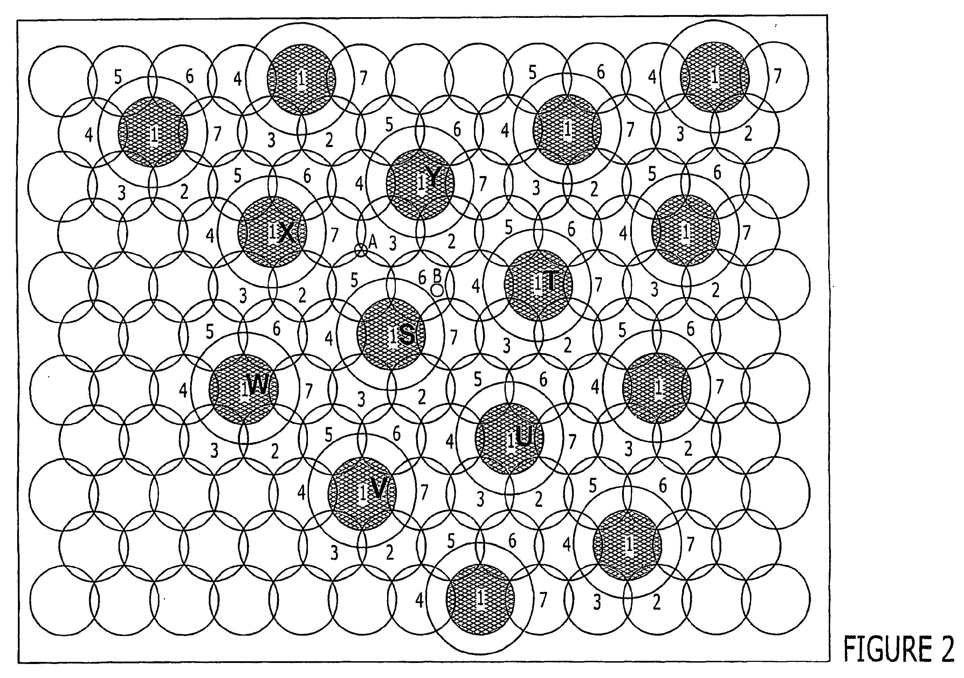

Figure 2 illustrates an example of intra-system frequency reuse. As is illustrated in Figure 2, a given frequency set, frequency set 1 for example, may be used and reused for satellite communications over at least a portion of a system's footprint in accordance with, for example, a seven-cell frequency reuse pattern. A given satellite cell, such as satellite cell S, configured to receive at least some frequencies of frequency set 1 from radioterminals that are operative over its footprint, may also receive interference from other intra-system terminal emissions intended, for example, for satellite cells T through Y that may be radiating at least some of the same frequencies as the radioterminals that are operative over satellite cell S. Figure 2 also illustrates the location of two ATCs, labeled as A and B, which may also be reusing all or some of the frequencies of frequency set 1. Thus, ATC ' emissions of ATC A and/or B may also cause interference to one or more receivers associated with satellite cell S and/or other satellite cells. Spatial guardbands, as described in the above-cited U.S. Patent Application Publication No. 2003/0054761 A1, are shown by the unshaded rings of Figure 2.

Referring to Figures 1 and 2 and to the satellite antenna 110 that is serving MSV's service footprint 130 (see Figure 1), at least some signals of at least some of the neighboring satellite cells of a given satellite cell, such as satellite cell S, may contain signals that are correlated with at least some components of an aggregate interference of the given satellite cell (such as satellite cell S). Such signals may be transported to, for example, a satellite gateway via a satellite feeder link, such as the satellite feeder link 101 illustrated on the left-hand side of Figure 1, to serve as inputs to an interference suppressor. Relative to the satellite antenna 120 that is directed toward the non-MSV service footprint 140, at least some signals that may be relevant to suppression of interference that may be received by the satellite antenna 110 serving the MSV footprint 130, may be transported to, for example, an MSV satellite gateway via a satellite feeder link, such as the satellite feeder link 102 illustrated on the right-hand side of Figure 1.

The two satellite feeder links 101, 102 illustrated in Figure 1 may use different frequencies and/or different frequency bands to transmit information to the ground to two or more spatially proximate or spatially distant receive antennas. In some embodiments the information transported to the ground (i.e., to a satellite gateway) by the feeder links 101, 102 illustrated in Figure 1 may be accommodated by a single feeder link using the frequencies of a single frequency band. In other embodiments, a satellite may be configured with two or more feeder links, using the frequencies of one or more frequency bands, to transport information from the satellite to at least one ground facility (i.e., a satellite gateway) via spatially separate and/or spatially proximate feeder link receive antennas on the ground.

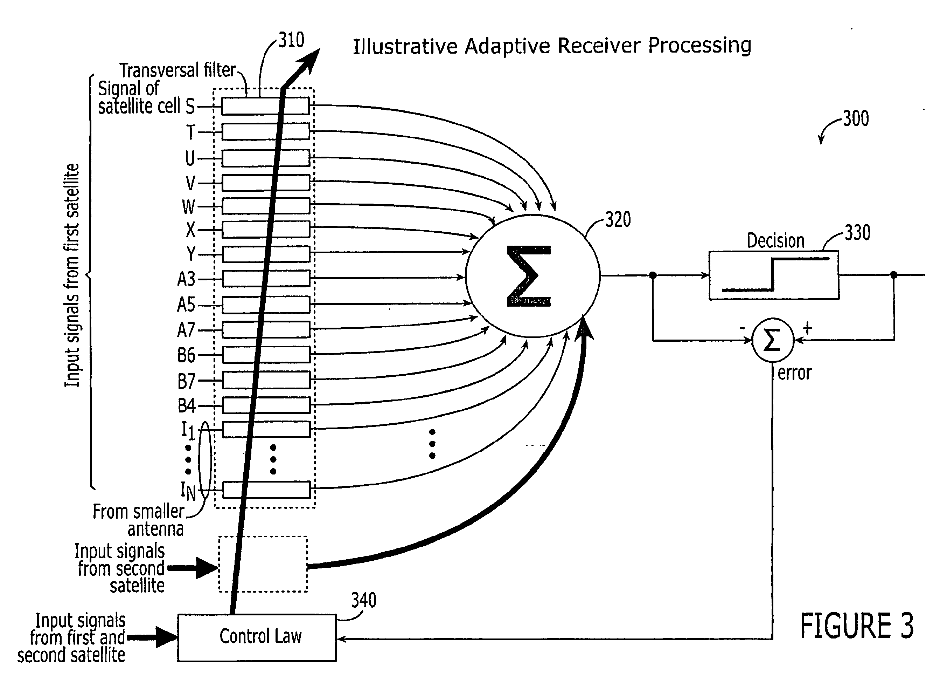

Figure 3 illustrates an architecture of an adaptive receiver 300, also referred to as an adaptive interference reducer, that may be configured at a satellite gateway (and/or other location) to suppress interference that may be generated by intra- and/or inter-system frequency reuse. Specifically, the receiver architecture of Figure 3 is shown operative to suppress interference that may be superimposed on a given "desired signal" received by satellite cell S. As such, the receiver 300 depicted in Figure 3 combines (in a combiner 320), in accordance with a control law or performance index (of a controller 340), such as a Least Mean Squared Error (LMSE) control law or performance index, via a plurality of (fractionally- and/or synchronously-spaced, feed-forward and/or decision-feedback) transversal filters 310, a plurality of signal inputs from a plurality of satellite cells that may be formed by one or more satellite antennas and/or satellites, to form a decision variable for recovering a desired signal in a detector 330.

Those skilled in the art will recognize that different control laws (other than LMSE), such as zero-forcing, may be used to form and/or update the transversal filter coefficients. Those skilled in the art will also recognize that different control law input signals may be required by the different control laws to derive update information for the plurality of transversal filter coefficients.

For example, in accordance with a zero-forcing control law, the error quantity (see Figure 3) and the output of the decision stage of Figure 3 may serve as inputs to the control law. It will also be recognized by those of skill in the art that the number of transversal filter coefficients per transversal filter need not be the same over the ensemble of transversal filters depicted in Figure 3. Some transversal filters may, for example, have seven (7) coefficients or taps, while others may have five (5) or only three (3) and some transversal filters may be limited to a single coefficient. In some embodiments, all transversal filters have an identical number of coefficients or taps (greater than or equal to one). Furthermore, in some embodiments, the architecture of each transversal filter of the ensemble of transversal filters of Figure 3 may not be the same for all transversal filters of the ensemble. For example, some transversal filters may be synchronously-spaced, others fractionally-spaced, and others decision-feedback with either synchronously- or fractionally-spaced feed-forward sections.

Referring again to Figure 3, it is seen that the top (first) transversal filter input labeled "signal of satellite cell S" denotes the desired signal plus interference, as received by satellite cell S (see Figure 2). The transversal filter inputs T through Y represent signals that may be correlated with the desired signal of satellite cell S and/or with the interference signal(s) of satellite cell S that may be due to intra- and/or inter-satellite system frequency reuse. These signals T through Y represent signals from adjacent satellite system cells that use the same frequency or frequencies as cell S. It will be understood that non-adjacent satellite cells that use the same frequency or frequencies as satellite cell S, shown by some or all of the cross-hatched cells and/or some or all of the non-cross-hatched cells of Figure 2, other that cells S-Y, may also provide signals to other transversal filters of the ensemble of transversal filters (not shown) and thus also contribute elements to combining junction 320 of Figure 3.

The transversal filter inputs A3 through A7 and B6 through B4 represent signals that may be correlated with, among other signals, the interference components of the signal of satellite cell S generated by ATC A and B, respectively. Fewer or more A and/or B signals and a correspondingly fewer or more transversal filters than the numbers shown in Figure 3 may be provided in some embodiments. In particular, in Figure 3, the signals from the three adjacent cells to an ATC that is terrestrially reusing the same frequency or frequencies as satellite cell S are provided. Thus, for ATC A, the signals from satellite cells 3, 5 and 7 are provided as inputs, and for ATC B, the signals from satellite cells 4, 6 and 7 are provided. In other embodiments, signals from non-adjacent satellite cells also may be provided.

The transversal filter inputs I₁ through I_{N} provide signals from the smaller antenna of Figure 1, that may be correlated with, among other signals, the interference components of S that are due to inter- and/or intra-system frequency reuse. It is understood that, in general, all transversal filter input signals shown in Figure 3 may provide both interference and desired signal components.

In some embodiments, the number of antenna(s) of a satellite that may be directed toward another satellite radiotelephone system service footprint may be reduced or eliminated. Thus, in some embodiments, the small antenna of the satellite of Figure 1 may be eliminated. In such embodiments, the transversal filter inputs I, through IN of Figure 3 may be replaced with signals derived from the co-system (intra-system) satellite antenna cell patterns.

Thus, some embodiments of the present invention can use an adaptive interference reducer to reduce, minimize or eliminate intra- and/or inter-system interference and to improve a desired signal measure by providing as input signals to a plurality of transversal filters, signals of a given satellite cell (such as satellite cell S) and signals of one or more other satellite cells (such as satellite cells T-Y) that reuse and/or receive one or more frequencies of a desired satellite signal of the given satellite cell (such as satellite cell S). Thus, in some embodiments, signals from satellite cells S-Y may be used as inputs to an adaptive interference reducer, to improve a desired signal measure (such as signal strength) of a desired signal, such as a desired signal of satellite cell S, and to reduce interference from co-frequency intra- and/or inter-system reuse. Other embodiments of the present invention can add one or more of the following groups of signals as inputs to an adaptive interference reducer, to further reduce interference and improve the desired signal measure:
(1) Signals from adjacent and/or non-adjacent cells that reuse and/or receive one or more frequencies of a desired satellite signal such as the desired satellite signal of satellite cell S;
(2) Signals from satellite cells whose geographic service area contains an ATC and/or whose antenna pattern receives signals from an ATC (such as, but not limited to, satellite cells 6, 4, 7 that contain and/or receive signals from ATC B, and/or satellite cells 3, 7 and 5, that contain and/or receive signals from ATC A) which is/are terrestrially reusing at least one of the satellite frequencies of a desired satellite signal such as the desired satellite signal of satellite cell S;
(3) Signals from satellite cells that are immediately adjacent a satellite cell described in (2) above;
(4) Signals from satellite cells that are remote from the satellite cells described in (2) above;
(5) Signals from an ancillary antenna at the satellite that is pointed at the satellite footprint of another satellite system that reuses at least one of the frequencies of a desired satellite signal such as the desired satellite signal of satellite cell S, for example, input signals I₁-I_{N} of Figure 3;
(6) Signals from a second satellite in the given satellite radiotelephone system, that receives at least one of the frequencies of the given satellite cell, if the space based network includes multiple satellites, as shown in Figure 3 by the dashed box labeled "Input signals from second satellite"; and/or
(7) Signals from another satellite radiotelephone system that reuses at least one of the frequencies of satellite cell S that may be provided, for example, by a gateway and/or other component of the other satellite radiotelephone system.

Subcombinations and combinations of these input signals also may be provided to the adaptive interference reducer.

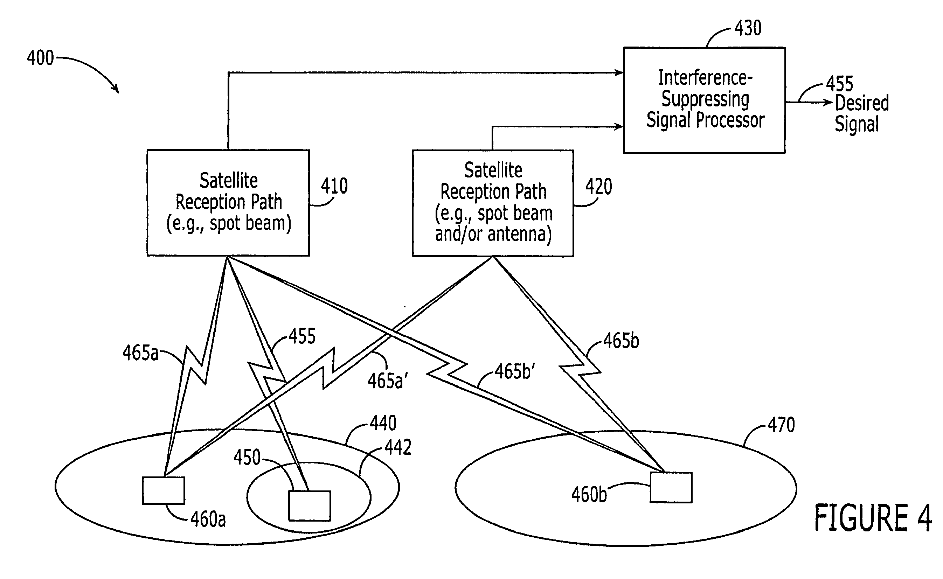

Further embodiments of the present invention are illustrated in Figure 4. As shown in Figure 4, a system 400 includes first and second satellite reception paths 410, 420. The first satellite reception path 410 serves a satellite cell 442 of a coverage area 440 of a satellite radiotelephone communications system (e.g., the MSV system of Figure 1). It will be appreciated that the first satellite reception path 410 may include, for example, a spot beam of a satellite (e.g., the satellite 100 of Figure 1), along with other components for conveying satellite-received signals. The first satellite reception path 410 receives a first signal including a desired signal 455 transmitted by a source 450 (e.g., a subscriber terminal) and an interfering signal transmitted by a second source, which may include, for example, an interfering signal 465a transmitted by a source 460a within the coverage area 440 (e.g., another terminal and/or an ATC) and/or an interfering signal 465b transmitted by a source 460b positioned outside of the coverage area (e.g., in a coverage area 470 of a second satellite communications system).

The signals received by the first and second satellite reception paths 410, 420 are provided to an interference-suppressing signal processor 430, which processes the received signals to recover the desired signal 455. The signal processor 430 may include, for example, an adaptive interference reducer along the lines described above with reference to Figure 3.

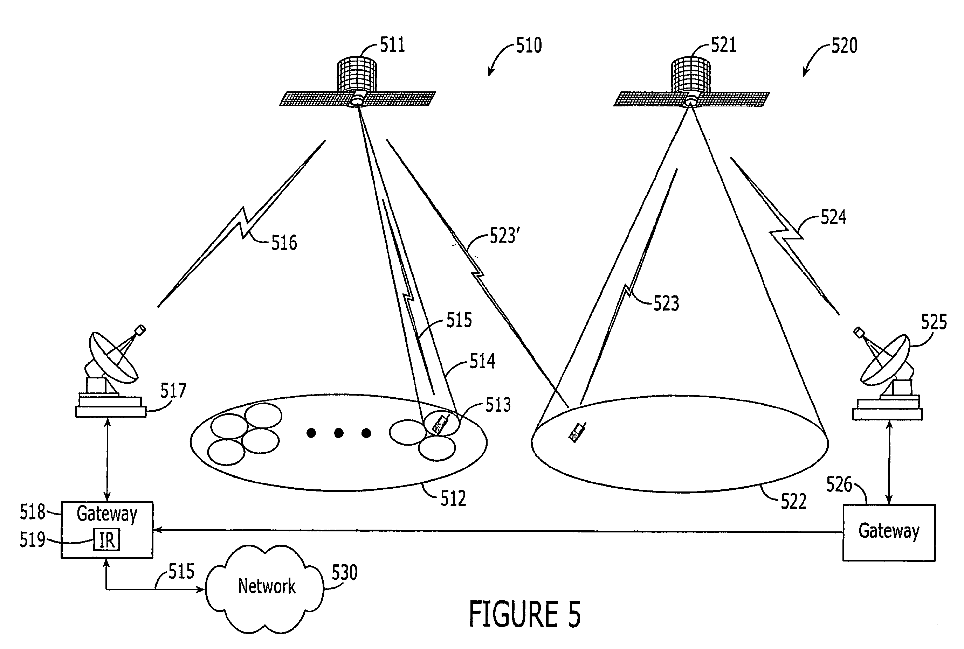

In further embodiments of the present invention, inter-system interference may be suppressed using a satellite reception path that is responsive to elements of an interfering satellite communications system. For example, as shown in Figure 5, interference in a first satellite radiotelephone communications system 510 introduced by an adjacent or overlapping second satellite communications system 520 may be reduced by capturing feeder downlink signals 524 that include a measure of interfering signals generated by users and/or components of the interfering system 520. In particular, the first satellite radiotelephone communications system 510 includes at least one satellite 511 that supports a satellite reception path that includes a spot beam 514 that serves a satellite cell 513. The spot beam 514 receives a signal including a desired signal 515 transmitted by a terminal in the cell 513 and an interfering signal 523 transmitted by a source that is communicating with a satellite 521, an ATC and/or a radioterminal of the second system 520. The satellite 521 of the second system 520 receives a signal 523 that includes a measure of the interfering signal 523'.

As shown in Figure 5, the first system 510 includes a gateway 518 served by a terrestrial gateway antenna 517 that receives a feeder downlink signal 516 from the satellite 511. It will be appreciated that the feeder downlink signal 516 includes the signal received by the spot beam 514. The second system 520 similarly includes a gateway 526 that is served by a terrestrial gateway antenna 525 that receives a feeder downlink signal 524 from the satellite 520. It will be further appreciated that the feeder downlink signal 524 includes the terrestrially generated signal 523, received by the satellite 521, and, therefore, a measure of the interference signal 523'.

The signal 523 received by the satellite 521 of the second system 520 is conveyed from the gateway 526 of the second system 520 to the gateway 518 of the first system 510. The gateway 51 8 of the first system 510 may include an interference reducer (IR) 519 that is configured to process the signals received by the first and second satellites 511, 521 to recover the desired signal 515. The recovered signal 515 may be conveyed on to other network components 530, such as telephony network components (switches, routers, etc.) and/or ATN components. It will be appreciated that the IR 519 may receive other signal inputs (not shown in Figure 5) that provide one or more measures of the same and/or other interference signals, for example, signal inputs from other spot beams, satellite(s), satellite gateway(s), ancillary antennas and/or other satellite system components of the same and/or other satellite system and/or ATC/ATN, for example, along the lines described above with reference to Figures 1-4.

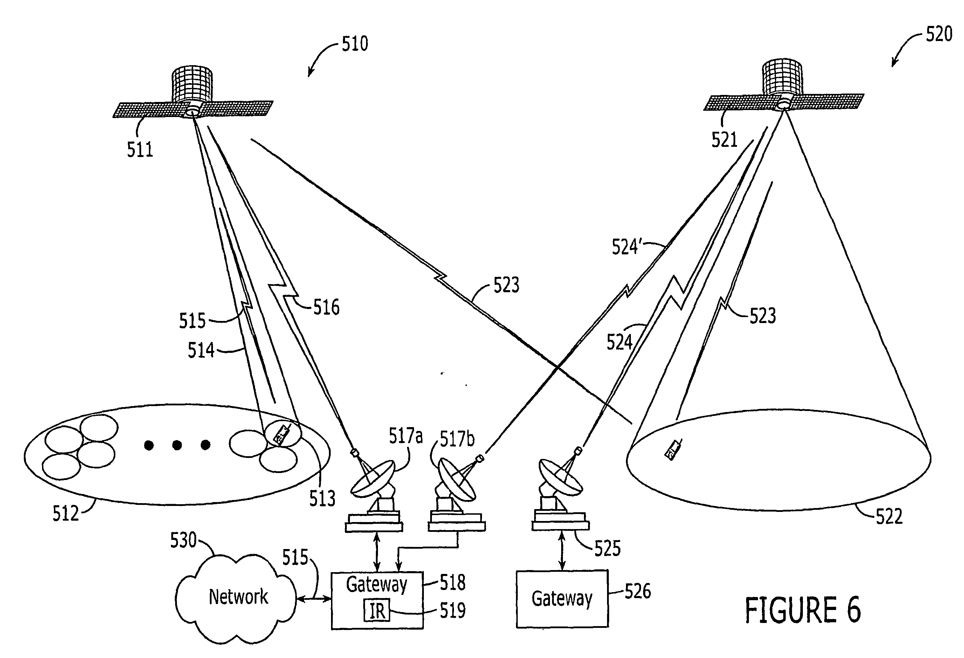

Referring to Figure 6, in other embodiments of the present invention, for example, in applications in which signals generated in conjunction with an interfering system are not directly available from the interfering system, an interfering signal may be obtained by directly capturing a downlink feeder signal transmitted by the interfering system. For example, in addition to a terrestrial antenna 517a that is configured to receive downlink feeder signals 516 transmitted by the satellite 511 of the first system 510, a terrestrial antenna 517b may be coupled to the gateway 518 of the first system 510 and configured to receive a measure of the downlink feeder signal 524 of the interfering second system 520. It will be appreciated that the first and second antennas 517a, S 17b may be physically separate antennas and/or spatially diverse antenna beams supported by a single antenna structure and, for example, a beamforming network. It will be appreciated that the terrestrial antenna 517a may be coupled to the first system 510 in any of a number of different ways. It will be further appreciated that the IR 519 may be positioned in a different component of the first system 510, and may be distributed among multiple components of the first system 510.

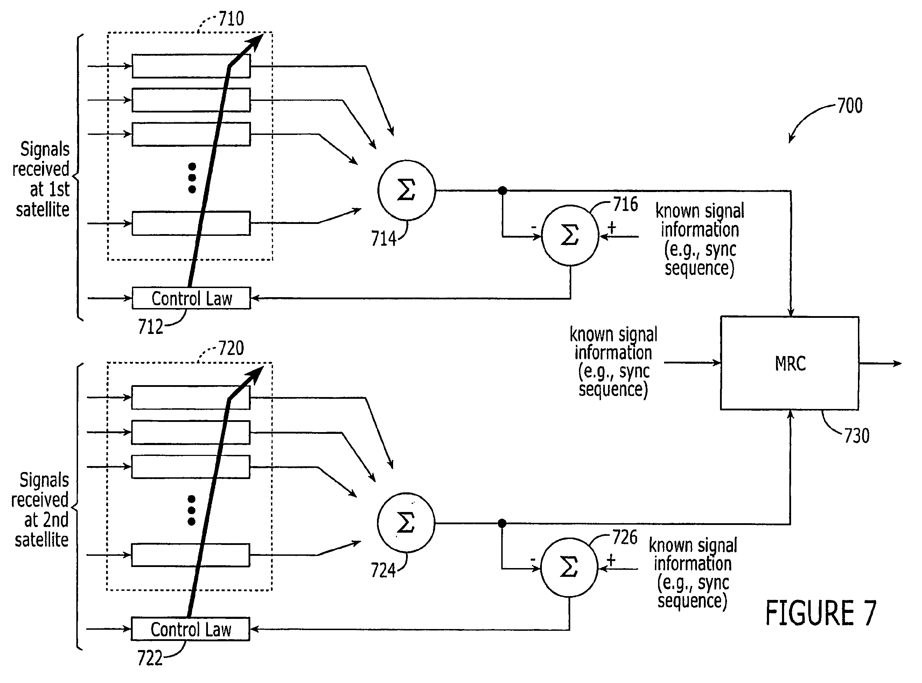

In embodiments in which an adaptive interference reducer uses signal information received from different satellites, differences in signal propagation delays between the two satellites may render a receiver along the lines illustrated in Figure 3 suboptimum. In exemplary embodiments of the present invention illustrated in Figure 7, an adaptive interference-suppressing signal processor (interference reducer) 700 includes separate combining stages for signals received by separate satellites to accommodate for such timing differences. In particular, signals received at a first satellite, including a desired signal and one or more interfering signals, are filtered by a first set of transversal (or other) filters 710, and the resulting filtered signals are combined at a first summing junction 714. It will be understood that the signals provided to the transversal filters 710 may take many forms. For example, the signals may respectively correspond to respective satellite spot beam signals and/or may include signals received by one or more antenna feed elements of the satellite.

As shown in Figure 7, a controller 712 adjusts the transversal filter coefficients of transversal filters 710 responsive to an error signal generated by comparing the output of the summing junction 714 and known information present in and/or associated with the desired signal (e.g., a pilot signal and/or a synchronization sequence) at a second summing junction 716. It will be appreciated that the known information may be used to provide a timing reference for this branch of the interference-suppressing signal processor 700, e.g., by providing the interference-suppressing signal processor 700 with information as to the temporal location of particular symbols in the desired signal as received at the satellite.

Similarly, signals received at a second satellite, including the desired signal and one or more interfering signals, are filtered by a second set of transversal filters 720, and the resulting filtered signals combined at a second summing junction 724. A controller 722 adjusts the transversal filters 720 responsive to an error signal generated by comparing the output of the summing junction 724 and known information present in and/or associated with the desired signal (e.g., a pilot signal and/or a synchronization sequence) at a summing junction 726.

It will be appreciated that the adaptive interference-suppressing signal processor 700 may be implemented in a number of different ways. For example, portions of the interference-suppressing signal processor 700 may be positioned at a satellite and/or at gateways or network equipment coupled to a satellite. It will also be understood that the controllers 712, 722 may utilize a control law or performance index, such as a Least Mean Squared Error (LMSE) control law or performance index. The transversal filters 710, 720 may include, for example, fractionally- and/or synchronously-spaced, feed-forward and/or decision-feedback filters. Those skilled in the art will recognize that different control laws (other than LMSE), such as, for example, zero-forcing or Kalman-based, may be used to form and/or update the transversal filter coefficients of transversal filters 710 and/or 720 and that the control laws 712 and 722 may be the same or different. Those skilled in the art will also recognize that different control law input signals may be required by the different control laws to derive update information for the plurality of transversal filter coefficients. It will also be recognized by those of skill in the art that the number of transversal filter coefficients per transversal filter need not be the same over the ensembles of transversal filters 710, 720. Some transversal filters may, for example, have seven (7) coefficients or taps, while others may have five (5) or only three (3) and some transversal filters may be limited to a single coefficient. In some embodiments, all transversal filters have an identical number of coefficients or taps (greater than or equal to one). Furthermore, in some embodiments, the architecture of each transversal filter of the ensemble of transversal filters of Figure 7 may not be the same for all transversal filters of the ensemble. For example, some transversal filters may be synchronously-spaced, others fractionally-spaced, and others decision-feedback with either synchronously- or fractionally-spaced feed-forward sections.

The signals produced by the summing junctions 714, 724 are combined in a maximal ratio (or other) combiner (MRC) 730. The MRC 730 combines the estimated signals responsive to comparison of signal estimates generated by the MRC 730 with known signal information. The MRC 730 may combine the signals to optimize a ratio of the desired signal to noise and/or interference. General operations of maximal ratio combiners are known to those of skill in the art, and will not be discussed in further detail herein.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A method of operating a satellite radiotelephone communications system, the method comprising:
receiving first radio signals at a first satellite, the received first radio signals including a desired signal using a frequency and an interfering signal using the frequency;
combining the first radio signals based on a first performance criterion to generate a first output signal;
receiving second radio signals at a second satellite, the received second radio signals including a measure of the desired signal;
combining the second radio signals based on a second performance criterion to produce a second output signal; and
combining the first and second output signals to generate an estimate of the desired signal.

2. A method according to Claim 1:
wherein combining the first radio signals based on a first performance criterion to generate a first output signal comprises:
determining a first timing for the desired signal as received by the first satellite;
determining an error of the first output signal responsive to the determined first timing; and
combining the first radio signals responsive to the determined error of the first output signal; and
wherein combining the second radio signals based on a second performance criterion to generate a second output signal comprises:
determining a second timing for the desired signal as received by the second satellite;
determining an error of the second output signal responsive to the determined second timing; and
combining the second radio signals responsive to the determined error of the second output signal.

3. A method according to Claim 2:
wherein determining a first timing for the desired signal as received by the first satellite comprises synchronizing to a timing reference for the desired signal;
wherein determining an error of the first output signal responsive to the determined first timing comprises determining an error for known information in the first output signal responsive to the synchronizing; and
wherein combining the first radio signals responsive to the determined error comprises combining the first radio signals responsive to the error for known information in the first output signal.

4. A method according to Claim 1, wherein combining the first radio signals based on a first performance criterion to generate a first output signal comprises:
applying the first radio signals to a plurality of filters;
combining outputs of the plurality of filters to produce the first output signal; and
modifying at least one filter parameter responsive to the first output signal.

5. A method according to Claim 1, wherein combining the first and second output signals to generate an estimate of the desired signal comprises maximal ratio combining the first and second output signals.

6. A method according to Claim 1, wherein the first satellite serves a first terrestrial coverage area and wherein the second satellite serves a second terrestrial coverage area adjacent and/or overlapping the first coverage area.

7. A method according to Claim 6, wherein respective ones of the first and second radio signals correspond to signals of respective satellite spot beams and/or antenna feeds.

8. A satellite radiotelephone communications system, comprising:
a first satellite that receives first radio signals including a desired signal using a frequency and an interfering signal using the frequency;
a second satellite that receives second radio signals including a measure of the desired signal; and
an interference-suppressing signal processor configured to combine the first radio signals based on a first performance criterion to generate a first output signal, to combine the second radio signals based on a second performance criterion to produce a second output signal, and to combine the first and second output signals to generate an estimate of the desired signal.

9. A system according to Claim 8:
wherein the interference-suppressing signal processor is configured to determine a first timing for the desired signal as received by the first satellite, to determine an error of the first output signal responsive to the determined first timing, and to combine the first radio signals responsive to the determined error of the first output signal; and
wherein the interference-suppressing signal process is further configured to determine a second timing for the desired signal as received by the second satellite, to determine an error of the second output signal responsive to the determined second timing and to combine the second radio signals responsive to the determined error of the second output signal.

10. A system according to Claim 9, wherein the interference-suppressing signal processor is configured to synchronize to a timing reference for the desired signal, to determine an output signal error for known information in the first output signal responsive to the synchronizing, and to combine the first radio signals responsive to the output signal error.

11. A system according to Claim 8, wherein the interference-suppressing signal processor comprises:
a plurality of filters configured to receive the first radio signals;
a combiner configured to combine outputs of the plurality of filters to produce the first output signal; and
a controller operative to modify at least one parameter of the plurality of filters responsive to the first output signal signal.

12. A system according to Claim 8, wherein the interference-suppressing signal processor comprises a maximal ratio combiner configured to combine the first and second output signals to generate the estimate of the desired signal.

13. A system according to Claim 8, wherein the first satellite serves a first terrestrial coverage area and wherein the second satellite serves a second terrestrial coverage area adjacent and/or overlapping the first coverage area.

14. A system according to Claim 8, wherein respective ones of the first and second radio signals correspond to signals of respective satellite spot beams and/or antenna feeds.

15. An apparatus, comprising:
an interference-suppressing signal processor configured to combine first radio signals received at a first satellite based on a first performance criterion to generate a first output signal, to combine second radio signals received at a second satellite based on a second performance criterion to produce a second output signal, and to combine the first and second output signals to generate an estimate of a desired signal.

16. An apparatus according to Claim 15:
wherein the interference-suppressing signal processor is configured to determine a first timing for the desired signal as received by the first satellite, to determine an error of the first output signal responsive to the determined first timing, and to combine the first radio signals responsive to the determined error of the first output signal; and
wherein the interference-suppressing signal process is further configured to determine a second timing for the desired signal as received by the second satellite, to determine an error of the second output signal responsive to the determined second timing and to combine the second radio signals responsive to the determined error of the second output signal.

17. An apparatus according to Claim 16, wherein the interference-suppressing signal processor is configured to synchronize to a timing reference for the desired signal, to determine an output signal error for known information in the first output signal responsive to the synchronizing, and to combine the first radio signals responsive to the output signal error.

18. An apparatus according to Claim 15, wherein the interference-suppressing signal processor comprises:
a plurality of filters configured to receive the first radio signals;
a combiner configured to combine outputs of the plurality of filters to produce the first output signal; and
a controller configured to modify at least one parameter of the plurality of filters responsive to the first output signal.

19. An apparatus according to Claim 15, wherein the interference-suppressing signal processor comprises a maximal ratio combiner configured to combine the first and second output signals to generate the estimate of the desired signal.

20. An apparatus according to Claim 15, wherein respective ones of the first and second radio signals correspond to signals of respective satellite spot beams and/or antenna feeds.

## Patentansprüche

1. Verfahren zum Betreiben eines Satelliten-Funktelefon-Kommunikationssystems, mit folgenden Schritten:
Empfangen von ersten Funksignalen bei einem ersten Satelliten, wobei die empfangenen ersten Funksignale ein Sollsignal, das eine Frequenz verwendet, und ein Störsignal, das die Frequenz verwendet, umfassen;
Kombinieren der ersten Funksignale basierend auf einem ersten Leistungskriterium, um ein erstes Ausgangssignal zu erzeugen;
Empfangen von zweiten Funksignalen bei einem zweiten Satelliten, wobei die empfangenen zweiten Funksignale ein Maß des Sollsignals umfassen;
Kombinieren der zweiten Funksignale basierend auf einem zweiten Leistungskriterium, um ein zweites Ausgangssignal zu erzeugen; und
Kombinieren des ersten und des zweiten Ausgangssignals, um eine Schätzung des Sollsignals zu erzeugen.

2. Verfahren nach Anspruch 1,
bei dem das Kombinieren der ersten Funksignale basierend auf einem ersten Leistungskriterium, um ein erstes Ausgangssignal zu erzeugen, folgende Schritte aufweist:
Bestimmen einer ersten zeitlichen Steuerung für das Sollsignal bei einem Empfang durch den ersten Satelliten;
Bestimmen eines Fehlers des ersten Ausgangssignals ansprechend auf die bestimmte erste zeitliche Steuerung; und
Kombinieren der ersten Funksignale ansprechend auf den bestimmten Fehler des ersten Ausgangssignals; und
bei dem das Kombinieren der zweiten Funksignale basierend auf einem zweiten Leistungskriterium, um ein zweites Ausgangssignal zu erzeugen, folgende Schritte aufweist:
Bestimmen einer zweiten zeitlichen Steuerung für das Sollsignal bei einem Empfang durch den zweiten Satelliten;
Bestimmen eines Fehlers des zweiten Ausgangssignals ansprechend auf die bestimmte zweite zeitliche Steuerung; und
Kombinieren der zweiten Funksignale ansprechend auf den bestimmten Fehler des zweiten Ausgangssignals.

3. Verfahren nach Anspruch 2,
bei dem das Bestimmen einer ersten zeitlichen Steuerung für das Sollsignal bei einem Empfang durch den ersten Satelliten ein Synchronisieren mit einem Zeitbezug für das Sollsignal aufweist;
bei dem das Bestimmen eines Fehlers des ersten Ausgangssignals ansprechend auf die bestimmte erste zeitliche Steuerung ein Bestimmen eines Fehlers für bekannte Informationen in dem ersten Ausgangssignal ansprechend auf das Synchronisieren aufweist; und
bei dem das Kombinieren der ersten Funksignale ansprechend auf den bestimmten Fehler ein Kombinieren der ersten Funksignale ansprechend auf den Fehler für bekannte Informationen in dem ersten Ausgangssignal aufweist.

4. Verfahren nach Anspruch 1, bei dem das Kombinieren der ersten Funksignale basierend auf einem ersten Leistungskriterium, um ein erstes Ausgangssignal zu erzeugen, folgende Schritte aufweist:
Anlegen der ersten Funksignale an eine Mehrzahl von Filtern;
Kombinieren von Ausgangssignalen der Mehrzahl von Filtern, um das erste Ausgangssignal zu erzeugen; und
Modifizieren mindestens eines Filterparameters ansprechend auf das erste Ausgangssignal.

5. Verfahren nach Anspruch 1, bei dem das Kombinieren des ersten und des zweiten Ausgangssignals, um eine Schätzung des Sollsignals zu erzeugen, ein Maximal-Verhältnis-Kombinieren des ersten und des zweiten Ausgangssignals aufweist.

6. Verfahren nach Anspruch 1, bei dem der erste Satellit einen ersten terrestrischen Versorgungsbereich bedient und bei dem der zweite Satellit einen zweiten terrestrischen Versorgungsbereich, der zu dem ersten Versorgungsbereich benachbart ist und/oder denselben überlappt, bedient.

7. Verfahren nach Anspruch 6, bei dem jeweilige der ersten und der zweiten Funksignale Signalen von jeweiligen Satelliten-Fleckstrahlen und/oder Antennen-Einspeisungen entsprechen.

8. Satelliten-Funktelefon-Kommunikationssystem mit:
einem ersten Satelliten, der erste Funksignale, die ein Sollsignal, das eine Frequenz verwendet, und ein Störsignal, das die Frequenz verwendet, umfassen, empfängt;
einem zweiten Satelliten, der zweite Funksignale, die ein Maß des Sollsignals umfassen, empfängt; und
einem störungsunterdrückenden Signalprozessor, der konfiguriert ist, um die ersten Funksignale basierend auf einem ersten Leistungskriterium zu kombinieren, um ein erstes Ausgangssignal zu erzeugen, die zweiten Funksignale basierend auf einem zweiten Leistungskriterium zu kombinieren, um ein zweites Ausgangssignal zu erzeugen, und das erste und das zweite Ausgangssignal zu kombinieren, um eine Schätzung des Sollsignals zu erzeugen.

9. System nach Anspruch 8,
bei dem der störungsunterdrückende Signalprozessor konfiguriert ist, um eine erste zeitliche Steuerung für das Sollsignal bei einem Empfang durch den ersten Satelliten zu bestimmen, um einen Fehler des ersten Ausgangssignals ansprechend auf die bestimmte erste zeitliche Steuerung zu bestimmen und um die ersten Funksignale ansprechend auf den bestimmten Fehler des ersten Ausgangssignals zu kombinieren; und
bei dem der störungsunterdrückende Signalprozessor ferner konfiguriert ist, um eine zweite zeitliche Steuerung für das Sollsignal bei einem Empfang durch den zweiten Satelliten zu bestimmen, um einen Fehler des zweiten Ausgangssignals ansprechend auf die bestimmte zweite zeitliche Steuerung zu bestimmen und um die zweiten Funksignale ansprechend auf den bestimmten Fehler des zweiten Ausgangssignals zu kombinieren.

10. System nach Anspruch 9, bei dem der störungsunterdrückende Signalprozessor konfiguriert ist, um sich mit einem Zeitbezug für das Sollsignal zu synchronisieren, um einen Ausgangssignalfehler für bekannte Informationen in dem ersten Ausgangssignal ansprechend auf das Synchronisieren zu bestimmen und um die ersten Funksignale ansprechend auf den Ausgangssignalfehler zu kombinieren.

11. System nach Anspruch 8, bei dem der störungsunterdrückende Signalprozessor folgende Merkmale aufweist:
eine Mehrzahl von Filtern, die konfiguriert sind, um die ersten Funksignale zu empfangen;
einen Kombinierer, der konfiguriert ist, um Ausgangssignale der Mehrzahl von Filtern zu kombinieren, um das erste Ausgangssignal zu erzeugen; und
eine Steuerung, die wirksam ist, um mindestens einen Parameter der Mehrzahl von Filtern ansprechend auf das erste Ausgangssignal zu modifizieren.

12. System nach Anspruch 8, bei dem der störungsunterdrückende Signalprozessor einen Maximal-Verhältnis-Kombinierer, der konfiguriert ist, um das erste und das zweite Ausgangssignal zu kombinieren, um die Schätzung des Sollsignals zu erzeugen, aufweist.

13. System nach Anspruch 8, bei dem der erste Satellit einen ersten terrestrischen Versorgungsbereich bedient und bei dem der zweite Satellit einen zweiten terrestrischen Versorgungsbereich, der zu dem ersten Versorgungsbereich benachbart ist und/oder denselben überlappt, bedient.

14. System nach Anspruch 8, bei dem jeweilige der ersten und der zweiten Funksignale Signalen von jeweiligen Satelliten-Fleckstrahlen und/oder Antennen-Einspeisungen entsprechen.

15. Vorrichtung mit:
einem störungsunterdrückenden Signalprozessor, der konfiguriert ist, um erste Funksignale, die bei einem ersten Satelliten empfangen werden, basierend auf einem ersten Leistungskriterium zu kombinieren, um ein erstes Ausgangssignal zu erzeugen, zweite Funksignale, die bei einem zweiten Satelliten empfangen werden, basierend auf einem zweiten Leistungskriterium zu kombinieren, um ein zweites Ausgangssignal zu erzeugen, und das erste und das zweite Ausgangssignal zu kombinieren, um eine Schätzung eines Sollsignals zu erzeugen.

16. Vorrichtung nach Anspruch 15,
bei der der störungsunterdrückende Signalprozessor konfiguriert ist, um eine erste zeitliche Steuerung für das Sollsignal bei einem Empfang durch den ersten Satelliten zu bestimmen, um einen Fehler des ersten Ausgangssignals ansprechend auf die bestimmte erste zeitliche Steuerung zu bestimmen und um die ersten Funksignale ansprechend auf den bestimmten Fehler des ersten Ausgangssignals zu kombinieren; und
bei dem der störungsunterdrückende Signalprozessor ferner konfiguriert ist, um eine zweite zeitliche Steuerung für das Sollsignal bei einem Empfang durch den zweiten Satelliten zu bestimmen, um einen Fehler des zweiten Ausgangssignals ansprechend auf die bestimmte zweite zeitliche Steuerung zu bestimmen und um die zweiten Funksignale ansprechend auf den bestimmten Fehler des zweiten Ausgangssignals zu kombinieren.

17. Vorrichtung nach Anspruch 16, bei der der störungsunterdrückende Signalprozessor konfiguriert ist, um sich mit einem Zeitbezug für das Sollsignal zu synchronisieren, um einen Ausgangssignalfehler für bekannte Informationen in dem ersten Ausgangssignal ansprechend auf das Synchronisieren zu bestimmen und um die ersten Funksignale ansprechend auf den Ausgangssignalfehler zu kombinieren.

18. Vorrichtung nach Anspruch 15, bei der der störungsunterdrückende Signalprozessor folgende Merkmale aufweist:
eine Mehrzahl von Filtern, die konfiguriert sind, um die ersten Funksignale zu empfangen;
einen Kombinierer, der konfiguriert ist, um Ausgangssignale der Mehrzahl von Filtern zu kombinieren, um das erste Ausgangssignal zu erzeugen; und
eine Steuerung, die konfiguriert ist, um mindestens einen Parameter der Mehrzahl von Filtern ansprechend auf das erste Ausgangssignal zu modifizieren.

19. Vorrichtung nach Anspruch 15, bei der der störungsunterdrückende Signalprozessor einen Maximal-Verhältnis-Kombinierer, der konfiguriert ist, um das erste und das zweite Ausgangssignal zu kombinieren, um die Schätzung des Sollsignals zu erzeugen, aufweist.

20. Vorrichtung nach Anspruch 15, bei der jeweilige der ersten und der zweiten Funksignale Signalen von jeweiligen Satelliten-Fleckstrahlen und/oder Antennen-Einspeisungen entsprechen.

## Revendications

1. Procédé d'exploitation d'un système de communication radiotéléphonique par satellites, le procédé comprenant les étapes suivantes :
recevoir des premiers signaux radio à un premier satellite, les premiers signaux radio reçus incluant un signal désiré utilisant une fréquence et un signal brouilleur utilisant la fréquence ;
combiner les premiers signaux radio sur la base d'un premier critère de performances pour générer un premier signal de sortie ;
recevoir des deuxièmes signaux radio à un deuxième satellite, les deuxièmes signaux radio reçus incluant une mesure du signal désiré ;
combiner les deuxièmes signaux radio sur la base d'un deuxième critère de performances pour produire un deuxième signal de sortie ; et
combiner les premier et deuxième signaux de sortie pour générer une estimation du signal désiré.

2. Procédé selon la revendication 1 :
dans lequel la combinaison des premiers signaux radio sur la base d'un premier critère de performances pour générer un premier signal de sortie comprend les étapes suivantes :
déterminer une première condition temporelle pour le signal désiré, tel qu'il est reçu par le premier satellite ;
déterminer une erreur du premier signal de sortie en réponse à la première condition temporelle déterminée ; et
combiner les premiers signaux radio en réponse à l'erreur déterminée du premier signal de sortie ; et
dans lequel la combinaison des deuxièmes signaux radio sur la base d'un deuxième critère de performances pour générer un deuxième signal de sortie comprend les étapes suivantes :
déterminer une deuxième condition temporelle pour le signal désiré, tel qu'il est reçu par le deuxième satellite ;
déterminer une erreur du deuxième signal de sortie en réponse à la deuxième condition temporelle déterminée ; et
combiner les deuxièmes signaux radio en réponse à l'erreur déterminée du deuxième signal de sortie.

3. Procédé selon la revendication 2 :
dans lequel la détermination d'une première condition temporelle pour le signal désiré tel qu'il est reçu par le premier satellite comprend la synchronisation sur une référence temporelle pour le signal désiré ;
dans lequel la détermination d'une erreur du premier signal de sortie en réponse à la première condition temporelle déterminée comprend la détermination d'une erreur pour une information connue dans le premier signal de sortie, en réponse à la synchronisation ; et
dans lequel la combinaison des premiers signaux radio en réponse à l'erreur déterminée comprend la combinaison des premiers signaux radio en réponse à l'erreur pour l'information connue dans le premier signal de sortie.

4. Procédé selon la revendication 1, dans lequel la combinaison des premiers signaux radio sur la base d'un premier critère de performances pour générer un premier signal de sortie comprend :
l'application des premiers signaux radio à une multiplicité de filtres ;
la combinaison des signaux de sortie de la multiplicité de filtres pour produire le premier signal de sortie ; et
la modification d'au moins un paramètre de filtre en réponse au premier signal de sortie.

5. Procédé selon la revendication 1, dans lequel la combinaison des premiers et deuxièmes signaux de sortie pour générer une estimation du signal désiré comprend la combinaison à rapport maximal des premiers et deuxièmes signaux de sortie.

6. Procédé selon la revendication 1, dans lequel le premier satellite dessert une première zone de couverture terrestre et dans lequel le deuxième satellite dessert une deuxième zone de couverture terrestre adjacente à la première zone de couverture et/ou en chevauchement avec celle-ci.

7. Procédé selon la revendication 6, dans lequel des signaux respectifs parmi les premiers et deuxièmes signaux radio correspondent à des signaux de faisceaux étroits et/ou de sources d'antennes de satellites respectifs.

8. Système de communication radiotéléphonique par satellites, comprenant :
un premier satellite qui reçoit des premiers signaux radio incluant un signal désiré utilisant une fréquence et un signal brouilleur utilisant la fréquence ;
un deuxième satellite qui reçoit des deuxièmes signaux radio incluant une mesure du signal désiré ; et
un processeur de signal d'atténuation de brouillage, configuré pour combiner les premiers signaux radio sur la base d'un premier critère de performances pour générer un premier signal de sortie, pour combiner les deuxièmes signaux radio sur la base d'un deuxième critère de performances pour produire un deuxième signal de sortie, et pour combiner les premier et deuxième signaux de sortie pour générer une estimation du signal désiré.

9. Système selon la revendication 8 :
dans lequel le processeur de signal d'atténuation de brouillage est configuré pour déterminer une première condition temporelle pour le signal desiré, tel qu'il est reçu par le premier satellite, pour déterminer une erreur du premier signal de sortie en réponse à la première condition temporelle déterminée, et pour combiner les premiers signaux radio en réponse à l'erreur déterminée du premier signal de sortie ; et
dans lequel le processeur de signal d'atténuation de brouillage est en outre configuré pour déterminer une deuxième condition temporelle pour le signal désiré, tel qu'il est reçu par le deuxième satellite, pour déterminer une erreur du deuxième signal de sortie en réponse à la deuxième condition temporelle déterminée, et pour combiner les deuxièmes signaux radio en réponse à l'erreur déterminée du deuxième signal de sortie.

10. Système selon la revendication 9, dans lequel le processeur de signal d'atténuation de brouillage est configuré pour effectuer une synchronisation sur une référence temporelle pour le signal désiré, pour déterminer une erreur de signal de sortie pour une information connue dans le premier signal de sortie, en réponse à la synchronisation, et pour combiner les premiers signaux radio en réponse à l'erreur de signal de sortie.

11. Système selon la revendication 8, dans lequel le processeur de signal d'atténuation de brouillage comprend :
une multiplicité de filtres configurés pour recevoir les premiers signaux radio ;
un dispositif de combinaison configuré pour combiner des informations de sortie de la multiplicité de filtres pour produire le premier signal de sortie ; et
une unité de commande fonctionnant de façon à modifier au moins un paramètre de la multiplicité de filtres en réponse au premier signal de sortie.

12. Système selon la revendication 8, dans lequel le processeur de signal d'atténuation de brouillage comprend un dispositif de combinaison à rapport maximal configuré pour combiner les premiers et deuxièmes signaux de sortie pour générer l'estimation du signal désiré.

13. Système selon la revendication 8, dans lequel le premier satellite dessert une première zone de couverture terrestre et dans lequel le deuxième satellite dessert une deuxième zone de couverture terrestre adjacente à la première zone de couverture et/ou en chevauchement avec celle-ci.

14. Système selon la revendication 8, dans lequel des signaux respectifs parmi les premiers et deuxièmes signaux radio correspondent à des signaux de faisceaux étroits et/ou de sources d'antennes de satellites respectifs.

15. Appareil comprenant :
un processeur de signal d'atténuation de brouillage configuré pour combiner des premiers signaux radio reçus à un premier satellite sur la base d'un premier critère de performances, pour générer un premier signal de sortie, pour combiner des deuxièmes signaux radio reçus à un deuxième satellite sur la base d'un deuxième critère de performances, pour produire un deuxième signal de sortie, et pour combiner les premier et deuxième signaux de sortie pour générer une estimation d'un signal désiré.

16. Appareil selon la revendication 15 :
dans lequel le processeur de signal d'atténuation de brouillage est configuré pour déterminer une première condition temporelle pour le signal désiré, tel qu'il est reçu par le premier satellite, pour déterminer une erreur du premier signal de sortie en réponse à la première condition temporelle déterminée, et pour combiner les premiers signaux radio en réponse à l'erreur déterminée du premier signal de sortie ; et
dans lequel le processeur de signal d'atténuation de brouillage est en outre configuré pour déterminer une deuxième condition temporelle pour le signal désiré, tel qu'il est reçu par le deuxième satellite, pour déterminer une erreur du deuxième signal de sortie en réponse à la deuxième condition temporelle déterminée, et pour combiner les deuxièmes signaux radio en réponse à l'erreur déterminée du deuxième signal de sortie.

17. Appareil selon la revendication 16, dans lequel le processeur de signal d'atténuation de brouillage est configuré pour effectuer une synchronisation sur une référence temporelle pour le signal désiré, pour déterminer une erreur de signal de sortie pour une information connue dans le premier signal de sortie, en réponse à la synchronisation, et pour combiner les premiers signaux radio en réponse à l'erreur de signal de sortie.

18. Appareil selon la revendication 15, dans lequel le processeur de signal d'atténuation de brouillage comprend:
une multiplicité de filtres configurés pour recevoir les premiers signaux radio ;
un dispositif de combinaison configuré pour combiner des informations de sortie de la multiplicité de filtres pour produire le premier signal de sortie ; et
une unité de commande configurée pour modifier au moins un paramètre de la multiplicité de filtres en réponse au premier signal de sortie.

19. Appareil selon la revendication 15, dans lequel le processeur de signal d'atténuation de brouillage comprend un dispositif de combinaison à rapport maximal configuré pour combiner les premiers et deuxièmes signaux de sortie pour générer l'estimation du signal désiré.

20. Appareil selon la revendication 15, dans lequel des signaux respectifs parmi les premiers et deuxièmes signaux radio correspondent à des signaux de faisceaux étroits et/ou de sources d'antennes de satellites respectifs.
